(19) Europäisches Patentamt

European Patent Office

Office européen des brevets

(11) **EP 1 084 995 B1**

(12) **EUROPEAN PATENT SPECIFICATION**

(45) Date of publication and mention
of the grant of the patent:
**10.11.2004 Bulletin 2004/46**

(51) Int Cl.⁷: **C03B 19/14**, C03C 3/06, C03C 4/00

(21) Application number: **00120087.2**

(22) Date of filing: **15.09.2000**

(54) **Optical member of silica glass for transmitting fluorine excimer laser radiation and method for producing the same**

Optisches Element aus Quarzglas zum Durchlassen von Fluor-Excimer-Laserstrahlung und Verfahren zu seiner Herstellung

Elément optique en verre de quartz pour transmettre d'un rayonnement laser exicimère au fluor et procédé de sa fabrication

(84) Designated Contracting States:
**DE FR GB NL**

(30) Priority: **16.09.1999 JP 26177299**

(43) Date of publication of application:
**21.03.2001 Bulletin 2001/12**

(73) Proprietors:
- **Heraeus Quarzglas GmbH & Co. KG**
  **63450 Hanau (DE)**
- **SHIN-ETSU QUARTZ PRODUCTS CO., LTD.**
  **Shinjuku-ku, Tokyo 160-0023 (JP)**

(72) Inventors:
- **Yaginuma, Yasuyuki**
  **Koriyama-shi, Fukushima 963-8803 (JP)**
- **Fujinoki, Akira**
  **Koriyama-shi, Fukushima 963-0701 (JP)**
- **Nishimura, Hiroyuki**
  **Koriyama-shi, Fukushima 963-0101 (JP)**
- **Yokota, Toru**
  **Koriyama-shi, Fukushima 963-1248 (JP)**

(74) Representative: **Staudt, Armin, Dipl.-Ing. et al**
**Patentanwalt**
**Lange Strasse 10**
**63674 Altenstadt (DE)**

(56) References cited:
**EP-A- 0 691 312          EP-A- 1 035 084**
**EP-A- 1 043 282          WO-A-00/55689**
**US-A- 5 326 729**

- **PATENT ABSTRACTS OF JAPAN vol. 1996, no. 7, 31 July 1996 (1996-07-31) & JP 08 067530 A (SUMITOMO ELECTRIC IND LTD), 12 March 1996 (1996-03-12)**
- **PATENT ABSTRACTS OF JAPAN vol. 1996, no. 3, 29 March 1996 (1996-03-29) & JP 07 291635 A (SHIN ETSU CHEM CO LTD), 7 November 1995 (1995-11-07)**

## Description

## Technical Field to which the Invention Belongs

The present invention relates to an optical silica glass member favorably used as a material for transmitting ultraviolet laser radiation, particularly, the $F_2$ excimer laser radiation 157 nm in wavelength; and it relates to an optical silica glass member for transmitting $F_2$ excimer laser radiation suitable for optical members which constitute the optical system for ultraviolet radiation, such as lenses, windows, filters, beam splitters, photomasks, etc., that are employed in applications using $F_2$ excimer laser radiation.

## Prior Art

Conventionally, photolithography, i.e., the technique of forming a pattern of an integrated circuit on a wafer by using light, is widely used in the aligners for producing integrated circuits, because it is economically advantageous as compared with other techniques using an electron beam or an X-ray.

Recently, with an increase in the production of LSIs (Large Scale Integrated Circuits) with finer patterns and increased in the degree of integration, there is a demand for a patterning technique capable of fabricating further finer patterns with narrower line widths in a technology for lithography, and light with still shorter wavelength is demanded for the light source.

Aligners using i-lines 365 nm in wavelength capable of fabricating patterns with line widths in a range of from 0.4 to 0.5 μm or those using KrF excimer lasers 248.3 nm in wavelength capable of patterning lines having a line width of from 0.25 to 0.35 μm have been practically used heretofore, and more recently, there is being developed an aligner using an ArF excimer laser emitting light 193.4 nm in wavelength, which is capable of patterning lines 0.13 to 0.2 μm in line width.

Furthermore, as a technology for lithography for the next generation to the ArF, studies are being made on the direct patterning technique using electron beams, X-ray lithography, or $F_2$ excimer laser exposure technique. However, the direct patterning technique using electron beams and the X-ray lithography suffer serious technical problems on the throughput and the fabrication of masks, respectively. Accordingly, the $F_2$ excimer laser exposure technique, a technology for lithography utilizing light, is attracting much attention as an exposure technique of the next generation from the viewpoint that it is an extension of the similar ArF exposure technique.

As optical materials for use in the conventional excimer lasers using KrF and ArF, there has been employed silica glass from the viewpoint of transmittance, resistance against laser radiation, homogeneity, etc., and particularly used is a synthetic silica glass of high purity. A high purity silica glass exhibits high optical transmittance in the wavelength region for KrF and ArF, and the resistance against laser radiation has been sufficiently increased by the optimization of the conditions of production. Thus, optical materials suitable for KrF and ArF excimer laser radiation, particularly projection lenses using the high purity silica glass, have already been put into practice.

Concerning an optical material for a $F_2$ excimer laser, however, the conventional synthetic silica glasses used for KrF and ArF excimer lasers were found unfeasible because they cannot provide sufficiently high transmittance for an emission wavelength of $F_2$ excimer laser as short as 157 nm. Accordingly, no optical material except fluorite (calcium fluoride) was found applicable for $F_2$ excimer lasers, and this greatly limited the design of aligners.

On the other hand, the transmittance of a silica glass for a radiation 157 nm in wavelength is known to be greatly improved by doping fluorine. In JP-A-Hei4-19510 (the term JP-A- as referred herein signifies a published unexamined Japanese patent application") is disclosed a method comprising doping a silica glass with fluorine to reduce or completely deprive of the absorption over a wide range of wavelength from 155 to 400 nm attributed to structural defect, and to prevent the generation of structural defects from occurring even in case a high energy ultraviolet radiation is irradiated for a long duration of time.

Further, in JP-A-Hei8-67530 is disclosed a technique for improving the stability against ArF excimer laser by doping silica glass with fluorine and OH groups for a concentration of 1 mol% or higher and 10 wt.-ppm or higher, respectively. The disclosure also shows that the transmittance for ultraviolet radiation having a wavelength in the vicinity of 157 nm, i.e., the wavelength region corresponding to the emission of $F_2$ excimer lasers, is greatly improved.

In JP-A-Hei8-75901 is further disclosed a method for producing synthetic silica glass having excellent transmittance for vacuum ultraviolet and resistance against ultraviolet radiation. The method comprises doping synthetic silica glass with fluorine and hydrogen, and, at the same time, controlling the concentration of OH groups.

WO 00/55689 A1 belongs to the prior art within the meaning of Art 54 (3) EPC. It discloses an optical member made of a silicon oxyfluoride glass for transmitting $F_2$ excimer laser radiation. The fluorine content of the silicon oxyfluoride glass is in the range between 0,5 and 3 wt-% and it is showing a content of hydroxyl groups below 10 wt.-ppm. It does not exhibit a 215 nm absorption band after exposure to $F_2$ excimer radiation. The method of producing the silicon oxyfluoride comprises forming a porous preform by depositing silica particles obtained by flame hydrolysis. The porous preform is subjected to a first heat treatment step for dehydrating it in a temperature range from 900-1100 °C under a gaseous atmosphere containing a dehydrating gaseous

agent such as $Cl_2$, $SiCl_4$ or $CCl_4$ or a mixture of $Cl_2$ and helium. Furthermore the porous preform is subjected to a second heat treatment step for doping it with fluorine in a temperature range of from 1125 -1325 °C under a gaseous atmosphere of a compound containing fluorine atoms, such as $CF_4$. Then the porous preform is sintered into a transparent body in the temperature range of from 1350 to 1550 °C in a helium atmosphere.

EP 1 043 282 A1 belongs to the prior art within the meaning of Art 54 (3) EPC. It discloses an optical member made of a synthetic quartz glass for transmitting $F_2$ excimer laser radiation, having a fluorine content of at least 100 ppm. The hydroxyl group content is at most 100 ppm. For example, the fluorine content is 1161 ppm and the hydroxyl group concentration is 3.2 ppm. Other examples are showing a maximum fluorine concentration below 0,1 mol-%. The method of producing the synthetic quartz glass comprises forming a porous preform by depositing silica particles obtained by flame hydrolysis. Prior to sintering the porous preform is subjected to a heat treatment step for the simultaneous dehydrating and fluorine doping, using gas mixtures of $SiF_4$ or $SiF_4/SiCl_4$ and He.

EP 1 035 084 A1 belongs to the prior art within the meaning of Art 54 (3) EPC. It discloses a chlorine free silica glass member for transmitting $F_2$ excimer laser radiation, having a fluorine content between 100 and 1000 ppm and a hydroxyl group content of 1 to 50 ppm. The method of producing the silica glass member comprises forming a fluorine containing porous preform by depositing fluorine doped silica particles obtained by flame hydrolysis and then sintering the porous fluorine containing $SiO_2$ preform in a vacuum furnace at a temperature of 1500 °C.

**Problems that the Invention is to Solve**

The resistance of a silica glass against a $F_2$ excimer laser radiation, which is shorter in wavelength, cannot be improved sufficiently by adding fluorine, because the generation of defects that is generated by the irradiation cannot be sufficiently controlled. Furthermore, in case of using the silica glass as a transmitting material with further higher precision for use in the radiation of $F_2$ excimer lasers, particularly favorably as a member for lithography, it is necessary that the material not only exhibits excellent properties such as high transmittance and resistance with respect to the laser radiation above, but also possesses, at the same time, the general optical properties such that it is free from striae (at least it is striae-free in one direction, and more preferably, striae-free in all of the three directions), that it has low birefringence, and that it has high homogeneity (more specifically, that $\Delta n$ is $1 \times 10^{-5}$ or lower).

In particular, the presence of fluorine in silica glass leads to the decrease in refractive index. Thus, to obtain a uniform distribution in refractive index, i.e., the most important property required for an optical material, fluorine must be incorporated in such a manner that the fluorine concentration should become uniform. Accordingly, in general, there is known, for instance, a doping method comprising performing thermal treatment on a porous preform (i.e., the so-called soot method" for producing synthetic quartz, which comprises preparing a porous silica glass body denoted as soot body" and the like; in practice, the soot body" is a body obtained by depositing fine particles of silica glass, but in the present invention, they are all denoted collectively as porous preform") under a gaseous phase, or a method comprising introducing a fluorine compound in flame simultaneously with the preparation of a porous preform, etc. At any rate, it is difficult to homogeneously dope the porous preform with fluorine, and the final silica glass product obtained by sintering tends to exhibit a large concentration gradient of fluorine. Accordingly, it is often the case that the sintered silica glass is greatly impaired in homogeneity, in other words, it shows a great fluctuation in the distribution of refractive index.

Furthermore, doping of fluorine easily induces oxygen-deficient defects as to result in a drop in transmittance. This becomes a serious defect in case of using optical silica glass member for transmitting excimer laser radiation. Accordingly, it is necessary to sufficiently minimize the oxygen-deficient defects.

The present inventors have studied the physical properties of a silica glass and the damage behavior upon irradiating $F_2$ excimer laser radiation for a case of using $F_2$ excimer laser for irradiating ultraviolet radiation. As a result, there has been found a method for producing silica glass suitable as a silica glass for $F_2$ excimer laser, which silica glass in total exhibits satisfactory physical properties necessary for a general use optical member, while maintaining high transmittance and resistance against lasers. The present invention has been accomplished based on these findings.

That is, with an aim to use the silica glass above favorably as an optical silica glass for transmitting $F_2$ excimer laser radiation, an object of the present invention is to provide an optical silica glass for transmitting excimer laser radiation, which not only maintains high optical transmittance and excellent resistance against $F_2$ excimer laser radiation, but also is free from striae, and yet, maintains general optical properties such as high homogeneity and a low birefringence at a high level.

Another object of the present invention is to provide a production method of silica glass member for $F_2$ excimer lasers, said silica glass member having a high resistance against lasers with respect to the irradiation of $F_2$ excimer laser radiation, free from striae, a high homogeneity, and a low birefringence, yet having high optical transmittance for a radiation 157 nm in wavelength, i.e., the radiation generated by a $F_2$ excimer laser.

## Means for Solving the Problems

As a means to solve the problems above, silica glass is produced by maintaining its fluorine concentration at a predetermined level or higher and its Si-OH concentration at a predetermined level or lower, and by applying thereto a thermal and a mechanical homogenization treatment followed by a thermal annealing treatment; it has been found that there can be obtained a silica glass which yields satisfactory properties as required above.

More specifically, various types of fluorine-containing synthetic silica glasses with particular interest on the resistance thereof against the irradiation of $F_2$ excimer lasers and on the transmitting properties of $F_2$ excimer laser radiation have been studied. As a result, it has been found that, in order to obtain satisfactory characteristics as described above, the silica glass should maintain a fluorine concentration not lower than a predetermined value and a Si-OH concentration at a concentration not higher than a predetermined value. More specifically, it has been found that if the fluorine concentration is in a range of from 0.1 to 2.0 mol-% (ca. 320-6400 ppm), preferably in a range of from 0.7 to 2.0 mol-%, whereby the fluorine concentration distribution is 0.002 mol-% or less, and the OH group concentration is 5 wt.-ppm or less, preferably, 1 wt.-ppm or lower, and the birefringence at a wavelength of 633 nm is 0.5 nm/cm or lower, the silica glass exhibits particularly high resistance and transmittance for $F_2$ excimer laser radiation.

A pre-treatment on the porous preform is performed after forming said porous preform and before vitrifying it into a transparent silica glass body comprising pre-treatment steps either simultaneously or in a time sequential combination thereof, said pre-treatment steps comprising a treatment of reducing OH groups and a fluorine doping treatment and a treatment of removing oxygen deficient defects on the porous preform.

The invention described above in accordance with Claim 1 is based on those findings, and it relates to an optical silica glass for transmitting $F_2$ excimer laser radiation, which is formed from a transparent silica glass body prepared by depositing fine silica particles obtained by flame hydrolysis in gaseous phase of a compound containing silicon on a heat resistant base body and thereby forming a porous preform, followed by vitrifying the resulting porous preform into a transparent body by heating and sintering, so that the fluorine concentration is in a range of from 0.1 to 2.0 mol% and the OH group concentration is 5 wt.-ppm or less by performing, after forming said porous preform and before vitrifying it into a transparent silica glass body, a treatment for reducing OH groups, a treatment of removing oxygen deficient defects, and a fluorine doping treatment on the porous preform, either simultaneously or in a time sequential combination thereof.

More specifically, the present invention comprises a silica glass containing structural defects such as peroxy linkages (Si-O-O-Si) or dissolved oxygen molecules, which are oxygen-excessive type defects; Si-Si bonds or oxygen vacancies (Si ·· Si), which are oxygen-deficient type defects; or OH groups, $H_2O$, etc. Thus, the transmittance for radiation in the short wavelength region of 157 nm corresponding to the wavelength of the emission from the $F_2$ excimer laser is thereby decreased, but the structural defects inside the silica glass can be terminated by doping fluorine. Then, the stability of the silica glass against the high energy ultraviolet laser radiation such as those emitted from an ArF excimer laser can be improved as to ameliorate the transmittance for light at a wavelength of 157 nm.

However, even in such silica glasses above, an E' center (e-prime center) is induced by the irradiation of an $F_2$ excimer laser radiation, and the photo absorption due to the generation of the E' center affects the ultraviolet absorption edge as to lower the transmittance for radiation 157 nm in wavelength. It thereby causes a drop in laser resistance against irradiation of $F_2$ excimer lasers.

For controlling the generation of the E'center, it is necessary to dope fluorine in an appropriate density as well as reduce sufficiently the oxygen deficient defects having an absorption at 7.6 eV (163 nm) and to perform these two steps on the porous preform. Accordingly, an amount of fluorine to be contained suitably from 0.1 to 2.0 mol%, and preferably from 0.7 to 2.0 mol-%.

Furthermore, in order to suppress the generation of oxygen deficient defects, not only an effective decrease in Si-OH, but also a thermal treatment is necessary to be applied to the porous preform described above under an atmosphere of a gaseous compound containing chlorine at a stage before performing the thermal treatment for doping fluorine. In particular, it is preferred to use the gaseous compound containing chlorine by diluting it with gaseous oxygen.

Conventionally, Si-OH groups have been believed to increase the stability of the silica glass against the radiation of ArF excimer lasers. However, in case of irradiating $F_2$ excimer lasers, it is known that NBOHC (Non-Bridged Oxygen Hole Center), i.e., one of the induced defects, generate in the silica glass. Accordingly, this is presumed to be one of the causes for generating defects by $F_2$ excimer laser radiation. Furthermore, the transmittance for a radiation 157 nm in wavelength is impaired because the Si-OH structure itself has an absorption band in the vacuum ultraviolet region. However, a thermal treatment for the complete removal of Si-OH in a compound gas containing chlorine in a high concentration leads to an easy formation of oxygen-deficient defects.

When an oxygen-deficient defect generates, the transmittance for a radiation 157 nm in wavelength is greatly affected because an absorption band appears at 7.6 eV (163 nm). Accordingly, the conditions for the thermal treatment must be selected as such to prevent the generation of oxygen-deficient defects from occurring, and, at the same time, to sufficiently enable the removal of Si-OH. To achieve this, the thermal treatment can be effectively performed by properly mixing the compound gas containing chlorine with gaseous oxygen. Although it is possible to remove Si-OH under a mixed gas of an inert gas other than oxygen and a compound gas containing chlorine, it is effective to mix oxygen in case of suppressing the oxygen-deficient defects. By employing this, it is possible to suppress the generation of oxygen-deficient defects while sufficiently removing Si-OH with an atmospheric gas containing chlorine.

In practice, when $F_2$ excimer laser radiation 157 nm in wavelength is irradiated to a silica glass containing OH groups at a concentration of 10 ppm or higher, the generation of NBOHC which yields an intense absorption peak was confirmed to generate at 260 nm simultaneously with the generation of an E' center having an absorption peak at 215 nm. At the same time, the infrared absorption peak at a wavelength of 3680 cm$^{-1}$ assigned to OH group was observed to shift to a shorter wavelength side by about 26 cm$^{-1}$, and the peak intensity was decreased by about 6 %.

These phenomena were not observed in case of irradiating KrF or ArF lasers. Presumably, the O-H bonds between Si-OH that were not affected by the photon energy of KrF (5.0 eV) or ArF (6.4 eV) are now cut by a high energy radiation of $F_2$ (7.9 eV) as to generate NBOHC. Thus, by taking the above knowledge into consideration, it is understood that, in order to obtain a practical material for transmitting $F_2$ excimer lasers having favorable resistance against lasers, the content of Si-OH groups of the material should be controlled to at least 5 wt.-ppm or lower, preferably, 1 wt.-ppm or lower.

The invention of the present invention is specified in that the distribution of fluorine concentration of said transparent silica glass body is 0.002 mol-%. This can be achieved by applying thermal and mechanical homogenization treatment thereto.

In general, the refractive index of a silica glass can be reduced by doping fluorine. Accordingly, to obtain a silica glass with high homogeneity, it becomes crucial how to homogeneously dope fluorine. However, it is extremely difficult to homogeneously dope the porous preform with fluorine in a general fluorine doping treatment comprising thermal treatment to the porous preform under a controlled atmosphere, and a large distribution in fluorine concentration is formed in the silica glass as a result.

The cause of generating fluorine concentration distribution, i.e., the nonuniformity in bulk density of the porous preform, the external diffusion of fluorine which occurs during the vitrification of the porous preform into a transparent glass, etc., can be relaxed to some extent by controlling the heating condition and the atmospheric condition of the fluorine doping treatment; however, it is often the case that, when those conditions are selected, the time necessary for the treatment becomes too long as to extremely impair the productivity. Furthermore, it is still impossible to dope the preform with fluorine in a completely homogeneous manner.

Moreover, the optical members that are use in lithography apparatuses include large ones, such as a lens of the aligner whose diameter exceeds a size of 200 mm, and it is very difficult to make the fluorine concentration in the silica glass homogeneous.

Accordingly, a secondary homogenization treatment is performed to achieve an extremely uniform distribution in refractive index even in case a large silica glass as above is treated.

A silica glass subjected to a thermal and mechanical homogenization treatment as a secondary homogenization treatment above results in a uniform fluorine concentration as to yield a flat distribution in refractive index, and the striae are also removed. Thus, a silica glass suitable for an optical member for transmitting $F_2$ excimer laser radiation can be obtained. Since it is required that the distribution fluctuation in diffraction index for a common optical member for use in lithography should fall within $1 \times 10^{-5}$ or lower, it is required that the distribution in fluorine concentration should be 0.002 mol % (i.e., a fluctuation in concentration distribution of 6 mol-ppm).

Further, the birefringence at a wavelength of 633 nm is set at 0.5 nm/cm or less. This is achieved by applying a thermal annealing treatment to the transparent silica glass body in addition to the homogenization of fluorine concentration, and, in the gradual cooling step of the transparent silica glass body, gradual cooling is performed from the cooling initiation point to 600 °C at a rate of 5 °C/hour or lower.

More specifically, in order to use the silica glass member above as an optical silica glass member for transmitting $F_2$ excimer laser radiation, it is important to decrease the birefringence of the glass.

For the measurement of birefringence at such a high precision, the birefringence S is calculated from the retardation ($\Delta nd$) measured by using an ellipsometer and the like and a He-Ne laser (having a wavelength of 633 nm) in accordance with the following equation.

$$S = (\Delta nd)/ \text{ thickness of the specimen} \qquad 1)$$

The retardation ($\Delta nd$) above is a difference in optical path between the ordinary light and the light polarized by the birefringence. Thus, in accordance with the equation 1) above, for instance, in case of a specimen 5 cm in thickness and having a measured retardation of 10 nm, the birefringence S can be calculated as 2 nm/cm by dividing the retardation by the thickness.

In the case above, the retardation of 10 nm corresponds to $10/663 = 0.0158 \lambda$ from the relation with the measured wavelength of 633 nm. A retardation value as such is of no problem optically, however, in case of a wavelength of 157 nm, the retardation increases to 0.063 λ, i.e., a value 4 times or larger than the calculated value, which causes problems.

Thus, because of the wavelength dependence of the optical elasticity constant, a birefringence for a light of 157 nm happens to give further larger birefringence for a light measured at a wavelength of 633 nm, and it becomes a serious problem for an optical silica glass member for transmitting $F_2$ excimer laser radiation.

In order to overcome this problem, it is preferred to apply a thermal annealing treatment to the silica glass in the gradual cooling step above to thereby decrease the birefringence. More specifically, by applying the thermal annealing treatment in addition to the homogenization treatment, an optical member practically useful as an optical silica glass member for transmitting $F_2$ excimer laser radiation can be obtained free from striae, with high homogeneity, and with small birefringence.

Further, the invention according to Claim 2 is characterized in that the internal transmittance of the silica glass member is set to 70 % or higher at the $F_2$ excimer laser-emitting wavelength of 157 nm.

This enables providing a more stable optical silica glass member for transmitting $F_2$ excimer laser radiation, and particularly, a substrate for photomasks by properly controlling the concentration of fluorine and OH groups as well as the distribution of fluorine concentration and the oxygen-deficient defects, thereby not only shifting the absorption edge to the longer wavelength side, but also maintaining the internal transmittance to 70 % or higher at the $F_2$ excimer laser-emitting wavelength of 157 nm. This is achieved by applying the treatment to the porous member to lower the concentration of OH groups, the treatment for removing the oxygen-deficient defects, and the fluorine doping treatment, either simultaneously or in a time-sequential manner.

As a further method favorable for obtaining an optical silica glass member for transmitting $F_2$ excimer laser radiation, there is provided the method defined in Claim 3. The method of producing an optical silica glass member for transmitting $F_2$ excimer laser radiation comprises depositing fine silica particles obtained by flame hydrolysis in gaseous phase of a compound containing silicon on a heat resistant base body and thereby forming a porous preform, and then vitrifying the resulting porous preform into a transparent body in the temperature range of from 1400 to 1,500 °C, which method further comprises, between the forming step of the porous preform and the vitrification step for obtaining the transparent silica glass body, a first heat treatment step in a temperature range of from 800 to 1,200 °C under a mixed gaseous atmosphere of a chlorine-containing compound and oxygen, and a second step heat treatment step for doping the porous preform with fluorine after the first heat treatment step, in a temperature range of from 800 to 1,300 °C under a gaseous atmosphere of a compound containing fluorine atoms, whereby, after the vitrification step, a step of removing the striae in at least one direction is provided, which step comprises performing a homogenization treatment based on a mechanical deformation force applied to the heated and softened transparent silica glass body obtained by said vitrification step for obtaining the transparent body.

More specifically, in the second heat treatment step above for doping fluorine to the silica glass at a concentration as such as of a fluorine-containing silica glass, there is generally employed a method comprising adding fluorine to the porous preform under a gaseous atmosphere of a fluorine-containing compound while heating. Such method comprises using a gaseous fluorine compound such as $SiF_4$, $CF_4$, $SF_6$, etc., which decomposes at high temperatures to react with the silica glass either alone or as a mixture with an inert gas such as gaseous nitrogen, Ar, He, etc., or with gaseous oxygen, and, by properly selecting a thermal treatment condition, controlling the concentration of fluorine doped into silica glass.

Furthermore, in the process step above, the temperature of the thermal treatment at the fluorine doping treatment is preferably in a range of from 800 to 1300 °C although differing depending on the size and the volume of the porous preform to be treated.

If the temperature is 800 °C or lower, the doping of fluorine into the porous preform may become insufficient or it consumes too long process time. On the other hand, at a temperature of 1300 °C or higher, there occurs a problem of contamination due to the impurities which diffuse out from the furnace material. This causes unfavorable effects on the transmittance, the resistance against lasers, etc. Otherwise, since the furnace core tube for fluorine doping treatment is made from silica glass, there is a fear of causing a problem of damaging the furnace core tube. Accordingly, a temperature of 1300 °C or higher is not preferred.

Since the silica glass above is produced by soot method, the porous preform contains hydroxyl groups (Si-OH groups) at a considerable amount. The Si-OH groups can be greatly reduced by the heat treatment performed for the fluorine doping, but still, it is insufficient for use as a member for transmitting $F_2$ excimer laser radiation. In such a case, it is possible to set conditions suitable for the fluorine doping treatment and the thermal treatment for reducing Si-OH groups. However, if the thermal treatment is performed under an increased concentration and under higher temperature conditions as the thermal treatment conditions above, the probability of generating oxygen-deficient defects increases, and an absorption band appears at a wavelength of 163 nm to impair the transmittance and the resistance against $F_2$ excimer lasers.

Thus, in order to efficiently remove Si-OH while maintaining the high fluorine concentration, safely, and without generating any oxygen-deficient defects, it is effective to provide a Si-OH group removing step before the fluorine doping treatment, and performing thermal treatment under a mixed gas atmosphere comprising oxygen and a compound containing chlorine.

The thermal treatment above is performed, although differing depending on the size and the bulk density of the porous preform to be treated, under a temperature range of from 800 to 1200 °C, and by using a compound containing chlorine such as $Cl_2$, $SiCl_4$, $Si(CH_3)Cl_3$, etc., i.e., any type of compound which decomposes at a high temperature and undergoes reaction with the Si-OH groups contained in silica glass.

The transmittance at a wavelength of 157 nm is obtained by first measuring the apparent transmittance T inclusive of the reflection loss of a precisely polished specimen 10 mm in thickness using a vacuum ultraviolet spectrophotometer, and by then calculating the internal transmittance Ti by taking the ratio with respect to the theoretical transmittance (transmittance exclusive of the reflection loss) To at 157 nm.

More specifically, Ti can be obtained in accordance with the following equations, where R represents the reflection index and n represents the refractive index:

$$R = (n-1)2 / (n+1)2$$

$$To = (1 - R)2$$

$$Ti = T / To$$

Because the refractive index of the silica glass containing fluorine changes depending on the fluorine concentration, the internal transmittance must be calculated every time the refractive index is changed. However, it is extremely difficult to accurately measure the refractive index in the 157 nm region. Accordingly, in the present invention, the refractive index of a silica glass containing fluorine in the concentration range of from 0.1 mol% to 2.0 mol% is set to be in a range of from 1.689 to 1.677, and the internal transmittance was calculated by using these values. In case of a substrate for use as a photomask, for instance, as a material for transmitting $F_2$ excimer laser radiation, the apparent transmittance for a thickness of 10 mm is 61.1 % or higher, preferably, 69.8 % or higher.

Furthermore, in order to control the distribution of the fluorine concentration to 0.002 mol-% or lower, a step of removing the striae in at least one direction is provided, said step comprising performing a homogenization treatment based on a mechanical deformation force applied to the heated and softened transparent silica glass body obtained by the vitrification step above for obtaining the transparent silica glass body.

The homogenization treatment of the transparent silica glass body above is generally performed by holding the body at a high temperature of 1800 °C or higher for a long period of time in a refractory furnace, but such a homogenization treatment may cause a contamination due to the impurities incorporated inside the furnace material, jigs, and the atmosphere, thereby causing unfavorable influences on the resistance and the transmittance with respect to $F_2$ excimer laser radiation.

Thus, it is preferred to employ a homogenization treatment using no refractory furnaces, such as the method described in, for instance, JP-A-Hei7-267662. The homogenization treatment above comprises supporting the both ends in the longitudinal direction of the transparent silica glass body with a supporting member, and while rotating the body around the axis connecting the both supporting ends, forming a melting zone region on the synthetic silica glass ingot by using a burner, allowing the molten glass ingot to make outward protrusions in the molten zone by applying a pressure in the direction of the supporting axis, and after supporting the side planes with a support, applying the homogenization treatment in the same manner as above.

The silica glass thus obtained by applying the thermal and the mechanical homogenization treatment above yields a homogeneous fluorine concentration. Thus, the resulting product yields a flat distribution in refractive index while the striae are removed. Such a product is favorable as an optical member for $F_2$ excimer lasers. Furthermore, by changing the amount of treatment of the fluorine-containing transparent silica glass body to be subjected to the homogenization treatment and by using the molding treatment at the same time, silica glass members having various shapes and sizes with a flat distribution in refractive index maintained can be obtained.

Further, in order to achieve a birefringence at a wavelength of 633 nm which is 0.5 m/cm or lower, the invention according to Claim 4 is characterized in that the method comprises a step of thermal annealing treatment after the striae removing step, which step compres, after heating the transparent silica glass body to a temperature higher than the cooling initiation point, performing gradual cooling from the cooling initiation point to 600 °C while maintaining the cooling rate of 5 °C/hour or lower.

The conditions of the thermal treatment in the thermal annealing treatment above may be changed depending on the required birefringence. For instance, as representative conditions for achieving a birefringence of 0.5 nm/cm or less at a wavelength of 633 nm, there can be mentioned setting the cooling rate to 5 °C/hour or lower in gradual cooling from the cooling point (1150 °C) in the thermal annealing step, and setting the final temperature of cooling to a temperature not higher than 600 °C.

## Brief Description of the Drawings

**Fig. 1**   is a Table showing the characteristics of the specimens according to the Examples and Comparative Examples of the present invention.

**Fig. 2**   is a flow diagram showing the process steps for producing a basic optical silica glass member for transmitting $F_2$ excimer laser radiation according to the present invention.

**Fig. 3**   is a schematic diagram showing a furnace for use in performing dehydration treatment, fluorine doping treatment, and vitrification treatment for obtaining a transparent glass body.

## EXAMPLES

The present invention is described in further detail below by means of Examples shown in the drawings. It should be noted, however, that so long as there is no specific description, the sizes, the materials, the shapes, and the relative positions of the constituent components are not only limited thereto, but are provided only for explanatory means.

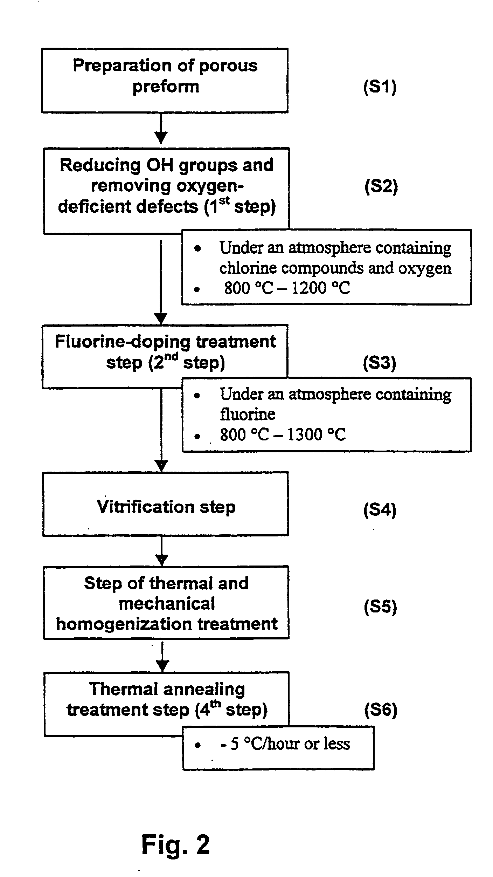

In accordance with the flow chart shown in Fig. 2, the process for producing an optical silica glass member for transmitting $F_2$ excimer laser radiation of the present invention is described schematically below.

First (S1), a compound containing silicon is subjected to flame hydrolysis in gas phase, and the obtained fine silica particles are deposited on a heat-resistant base to obtain a porous preform.

Then, the first and the second treatment steps described hereinafter are carried out before obtaining a transparent vitrified product by heating the thus obtained porous preform.

More specifically, in S2, the porous preform above is subjected to a heat treatment in a temperature range of from 800 to 1200 °C under a mixed gas atmosphere comprising a chlorine-containing compound and oxygen (First step).

In the subsequent step (S3), the preform is subjected to a thermal treatment in the temperature range of from 800 to 1300 °C under a gas atmosphere comprising a compound containing fluorine atoms (Second step).

The porous preform subjected to the first and the second treatment steps above is then heated in the temperature range of from 1400 to 1500 °C to obtain a transparent glass body by carrying out the treatment of transparent vitrification (S4).

Then, in S5, a thermal and the mechanical homogenization treatments are applied to the thus obtained transparent glass body to remove the striae (Third step).

In S6, the silica glass obtained after finishing the third step is heated to the gradual cooling point, and the thermal annealing treatment is applied thereto by cooling to the final temperature of 600 °C while maintaining the cooling rate to 5 ° C/hour or lower (Fourth step).

By carrying out the procedure above, an optical silica glass member for transmitting $F_2$ excimer laser radiation capable of achieving the object of the present invention can be obtained.

## Example 1

A gaseous raw material obtained by gasifying, i.e., a silane-based gas such as methyltrimethoxysilane $[CH_3Si(OCH_3)_3]$, etc., is introduced into an oxyhydrogen flame burner, and the fine silica glass particles generated by the flame hydrolysis reaction were deposited on a base 2 being rotated at a rate of 20.0 rpm to obtain a porous preform 1. The apparatus for producing such porous preform is known in the art.

The porous preform 1 thus obtained in the present example was found to have a weight of 4800 g and a density of 0.302 g/cm$^3$.

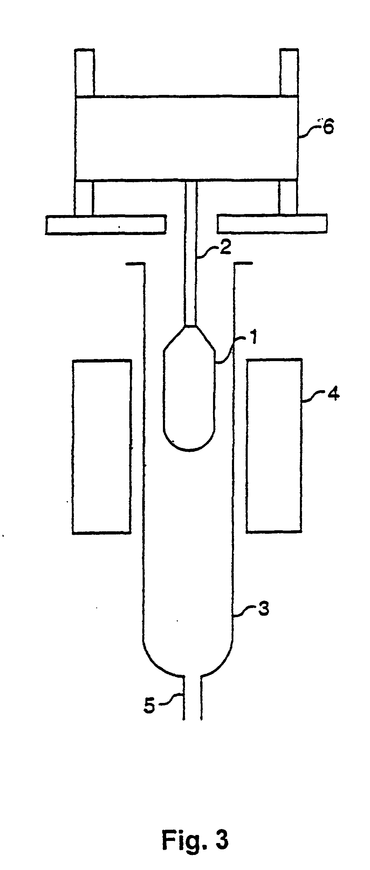

Then, referring to Fig. 3, the porous preform 1 was fixed on an elevator 6 via the base 2, and was moved downward inside a furnace core tube 3 surrounded by a carbon heater 4 on the outer periphery thereof, while introducing 0.1 liter/minute of $Cl_2$, 0.4 liter/minute of $O_2$, and 7.0 liter/minute of He (volume ratio of $Cl_2$:$O_2$:He = 1:4:70) from a nozzle 5 for process gas introduction disposed in alower end of the furnace core tube 3.

Thus, the silica glass preform 1 was subjected to a gradual dehydration treatment (removal of OH groups), i.e., the first thermal treatment step, by heating the preform 1 to 1050 °C using a carbon heater 4 under the aforementioned mixed gas atmosphere and while lowering the preform 1 at a rate of 2.5 mm/min.

Then, the inside of the furnace core tube 3 was replaced with an inert gas to evacuate the process gas used in the first step, and while lowering the silica glass preform 1 above inside the furnace core tube 3, the fluorine doping treatment, i.e., the second thermal treatment step, was performed. More specifically, the preform was lowered at a rate of 2.5 mm/min while heating at 1250 °C under a mixed gas atmosphere provided by flowing 0.4 liter/minute of $SiF_4$ and 7.0 liter/minute of He (volume ratio of $SiF_4$:He = 2:35).

Then, the inside of the furnace core tube 3 was replaced with an inert gas to evacuate the process gas used in the first step, and while lowering the silica glass preform 1 above inside the furnace core tube 3 at a rate of 1.0 mm/minute, the transparent vitrification treatment was performed at 1480 °C under a mixed gas atmosphere provided by flowing 0.4 liter/minute of $SiF_4$ and 7.0 liter/minute of He (volume ratio of $SiF_4$:He = 2:35).

The transparent glass body thus obtained was cut from the base body, and was subjected to the homogenization treatment, i.e., the third step based on JP-A-Hei7-267662.

More specifically, the homogenization treatment comprises fixing the support members on the both ends of the longitudinal direction of the thus cut rod-like transparent glass body. The support members are attached to the chucks of a lathe, and the rod-like transparent glass body is locally heated while rotating it; then, via the supporting member, the thus softened molten region obtained by local heating is processed by differing the mutual direction and the number of the rotation.

The rod-like silica glass is further heated and softened, and by compressing in the direction of the rotary axis via the supporting member, a ball-like transparent glass body is formed. After cutting the ball-like transparent glass body from the supporting member, the axis is rotated by 90 degrees, and the glass body is fixed again via the supporting member. The supporting member is attached to a pair of chucks, and while applying rotation, the entire ball-like glass is heated by using a burner to soften, and the distance between the chucks expanded to stretch the glass along the direction of the second axis to obtain a rod-like transparent glass body.

While rotating around the second axis above, the rod-like transparent glass body thus obtained is locally heated so that the thus softened molten region obtained by local heating is processed by differing the mutual direction and the number of the rotation via the supporting member. In this manner, a rod-like silica glass homogeneous in three directions is obtained. While rotating the rod-like silica glass, further heating and softening is performed to form a molten zone. Thus, by compressing in the direction of the rotary axis, a raw ingot of silica glass was obtained in the shape of a rugby ball having a diameter of about 130 mm and a height of about 200 mm.

In this manner, silica glass free from striae in three directions can be obtained.

Furthermore, the synthetic silica glass thus subjected to homogenization treatment was maintained at 1150 °C inside an electric furnace for a duration of 20 hours, and was subjected to thermal annealing treatment corresponding to the fourth step, comprising cooling gradually to 550 °C at a cooling rate of 1 °C/hour.

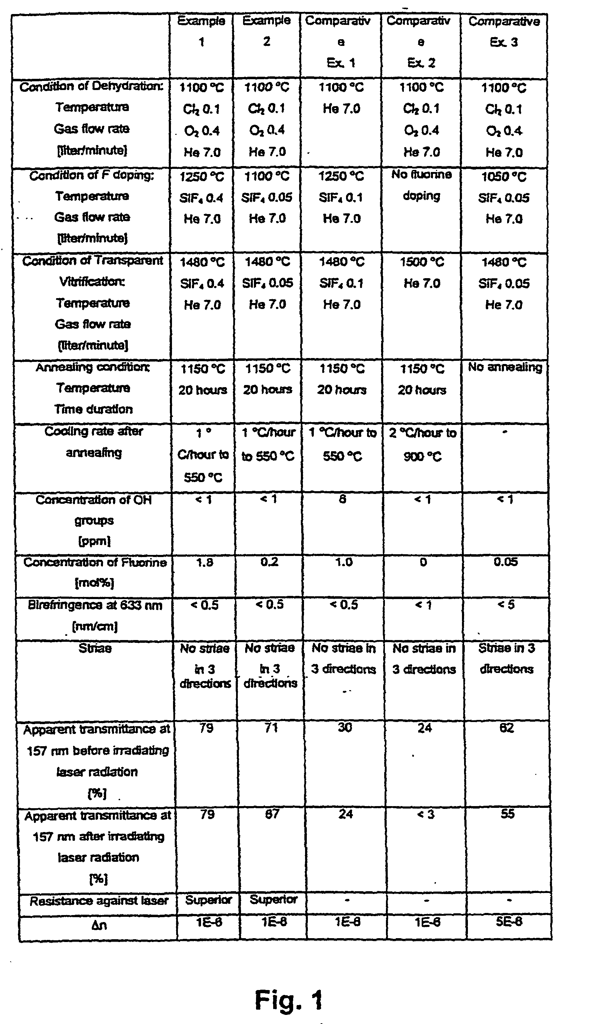

The concentrations of OH groups and fluorine, the birefringence measured at a wavelength of 633 nm, striae, the transmittance at a wavelength of 157 nm before and after irradiating a $F_2$ excimer laser radiation, the resistance against lasers, and the distribution in refractive index of the silica glass of Example 1 thus processed, are given in the left columns of the table provided in Fig. 1.

## Example 2

The process is basically the same as that described in Example 1, except for the fluorine doping treatment step and the transparent vitrification step corresponding to the second step.

More specifically, the fluorine doping treatment step (S3) according to the present example comprises lowering the preform at a rate of 2.5 mm/minute at 1100 °C under a mixed gas atmosphere provided by flowing 0.05 liter/minute of $SiF_4$ and 7.0 liter/minute of He (volume ratio of $SiF_4$:He = 1:140).

The step of transparent vitrification (S4) was performed by lowering the silica glass preform inside the furnace core tube at a rate of 1.0 mm/minute and at 1480 °C under a mixed gas atmosphere provided by flowing 0.05 liter/minute of $SiF_4$ and 7.0 liter/minute of He (volume ratio of $SiF_4$:He = 1:140).

Thus, a silica glass was prepared under conditions similar to those in Example 1. The concentrations of OH groups and fluorine, the birefringence measured at a wavelength of 633 nm, striae, the transmittance at a wavelength of 157 nm before and after irradiating a $F_2$ excimer laser radiation, the resistance against lasers, and the distribution in refractive index of the silica glass, are given in Fig. 1.

## Comparative Example 1

In the present example, the treatment described hereinafter was performed by changing each of the first step, the second step, and the step of transparent vitrification from those described in Example 1.

First, a porous preform 1 was prepared by subjecting a gaseous raw material obtained by gasifying methyltrimethoxysilane to oxyhydrogen flame hydrolysis.

The porous preform thus obtained was subjected to a first step (the step of removing Si-OH groups) by lowering the preform at a rate of 2.5 mm/minute and at 1250 °C while flowing 7.0 liter/minute of He.

In the subsequent second step, fluorine doping treatment was performed by lowering the silica glass preform at a rate of 2.5 mm/minute and at 1250 °C under a mixed gas atmosphere provided by flowing 0.2 liter/minute of $SiF_4$ and 7.0 liter/minute of He (volume ratio of $SiF_4$:He = 1:35).

In the transparent vitrification step, a transparent glass body was obtained by lowering the silica glass preform at a rate of 1.0 mm/minute and by heating at 1480 ° C under a mixed gas atmosphere provided by flowing 0.2 liter/minute of $SiF_4$ and 7.0 liter/minute of He (volume ratio of $SiF_4$:He = 1:35).

Then, a homogenization treatment and a thermal annealing treatment were performed in the same manner as in Example 1. The concentrations of OH groups and fluorine, the birefringence measured at a wavelength of 633 nm, striae, the transmittance at a wavelength of 157 nm before and after irradiating a $F_2$ excimer laser radiation, the resistance against lasers, and the distribution in refractive index of the silica glass, are given in Fig. 1.

**Comparative Example 2**

In Comparative Example 2, the second step was omitted, and the first step, the step of transparent vitrification, and the fourth step were each carried out by changing them from those described in Example 1.

First, a porous preform 1 was prepared by subjecting a gaseous raw material obtained by gasifying methyltrimethoxysilane to oxyhydrogen flame hydrolysis.

The resulting porous preform was subjected to dehydration treatment by lowering it at a rate of 2.5 mm/minute and by heating at 1100 °C under a mixed gas atmosphere provided by flowing 0.1 liter/minute of $Cl_2$, 0.4 liter/minute of $O_2$ and 7.0 liter/minute of He (volume ratio of $Cl_2$:$O_2$:He = 1:4:70)

In the following step of transparent vitrification, the porous preform was lowered at a rate of 1.0 mm/minute and at 1500 °C while flowing 7.0 liter/minute of He.

Then, a homogenization treatment similar to that described in Example 1 was performed.

Further, in the fourth step, the silica glass was maintained inside the electric furnace at 1150 °C for a duration of 20 hours, and then cooled to 900 °C at a cooling rate of 2 °C/hour.

The concentrations of OH groups and fluorine, the birefringence measured at a wavelength of 633 nm, striae, the transmittance at a wavelength of 157 nm before and after irradiating a $F_2$ excimer laser radiation, the resistance against lasers, and the distribution in refractive index of the silica glass, are given in Fig. 1.

**Comparative Example 3**

In Comparative Example 3, the first step, the temperature of heat treatment in the second step, and the step of transparent vitrification were each differed from those described in Example 1, and the fourth step was omitted.

First, a porous preform 1 was prepared by subjecting a gaseous raw material obtained by gasifying methyltrimethoxysilane to oxyhydrogen flame hydrolysis.

In the first step, the resulting porous preform was subjected to dehydration treatment by lowering it at a rate of 2.5 mm/minute and by heating at 1100 °C under a mixed gas atmosphere provided by flowing 0.1 liter/minute of $Cl_2$, 0.4 liter/minute of $O_2$ and 7.01 liter/minute of He (volume ratio of $Cl_2$:$O_2$:He = 1:4:70).

In the subsequent second step, fluorine doping was performed by lowering the silica glass preform at a rate of 4.0 mm/minute and by heating at 1050 °C under a mixed gas atmosphere provided by flowing 0.05 liter/minute of $SiF_4$ and 7.0 liter/minute of He (volume ratio of $SiF_4$:He = 1:35).

In the following step of transparent vitrification, the porous preform was moved downward at a rate of 1.0 mm/minute and at 1480 °C while flowing 0.05 liter/minute of $SiF_4$ and 7.0 liter/minute of He (volume ratio of $SiF_4$:He = 1:140).

Then, a homogenization treatment similar to that described in Example 1 was performed. However, no thermal annealing treatment was carried out. The concentrations of OH groups and fluorine, the birefringence measured at a wavelength of 633 nm, striae, the transmittance at a wavelength of 157 nm before and after irradiating a $F_2$ excimer laser radiation, the resistance against lasers, and the distribution in refractive index of the silica glass, are given in Fig. 1.

The physical properties shown in Fig. 1 corresponding to Examples 1 to 2 and Comparative Examples 1 to 3 were obtained in accordance with the measuring methods described below.

1) Concentration of Si-OH groups

The concentration was calculated from the absorption intensity of the OH stretching vibration (wavenumber: 3670 $cm^{-1}$) of Si-OH by measuring Fourier transform infrared absorption spectrum using Model 1720x spectrophotometer manufactured by Perkin Elmer Inc. The calculation was made in accordance with the following equation:

2) Concentration of OH groups (wt.-ppm) = 100 × (absorbance of absorption band at 3670 $cm^{-1}$) / thickness (cm)

3) Concentration of fluorine

The concentration was obtained by measuring Raman scattering spectrum, and was calculated from the intensity ratio for the $SiO_2$ band of Raman shift at 800 $cm^{-1}$ and the Si-F stretching vibration band at 945 $cm^{-1}$ in accordance with the method described in J. Material Sci., 28 (1993) pp. 2738 - 2744. The equipment used was JEOL NR-1100, and a wavelength of 488 nm of an Ar ion laser was employed.

4) Transmittance at 157 nm

A specimen the both faces of which were polished to the optical precision (i.e., the surface roughness was controlled to be 3 Angstrom or less in RMS value), having a diameter of 30 mm and a thickness of 10 mm, was subjected to the measurement of the apparent transmittance by using a vacuum ultraviolet spectrometer. As the measuring instrument, a JEOL VUV-200 vacuum ultraviolet spectrophotometer was employed.

5) Measurement of the distribution in refractive index

A measurement method using a Fizeau interferometer was employed. The distribution in refractive index per thickness of 10 mm of a specimen 60 mm in diameter and 10 mm in thickness was measured by using the wavelength of a HB-Ne laser.

6) Measurement of birefringence

The measurement was performed at a wavelength of 633 nm of the He-Ne laser. As the measuring instrument, a birefringence measuring apparatus Model AOR-200 manufactured by Oak Manufacturing Co. Ltd. was employed.

7) Striae

The striae was confirmed visually by using a polarization plates under crossed nicols.

8) Resistance against $F_2$ excimer laser radiation

A $F_2$ excimer laser radiation was irradiated to the specimen similar to that described in item 3), and the vacuum ultraviolet spectra were measured before and after irradiation in a manner similar to the measurement performed in item 3). Thus, from the change in transmittance for a wavelength of 157 nm, the resistance against laser irradiation was evaluated. The irradiation was performed inside a box purged with gaseous $N_2$, and the laser radiation was directly irradiated to the specimen. The irradiation was performed under conditions of an energy density per pulse of 8 mJ/cm$^2$ (3.2 W/cm$^2$), at a repetition frequency of 400 Hz, and a repetition of irradiation of 3.5 E+5 pulses.

To obtain a practical stability as an optical material, in general, the drop in transmittance at a wavelength of 157 nm after irradiating the F2 excimer laser according to the present invention for 3E+5 pulses at an energy density of 10 mJ/cm$^2$ per pulse should be 5 points or less per thickness of 10 mm. This is based on the fact that, if the transmitted energy is assumed to be 0.1 mJ/cm$^2$ in a practical use, the above value corresponds to a drop in transmittance in a range of from 3E+7 to 3E+9 pulses. Hence, this assures a satisfactory durability as an exchangeable optical component.

From the data shown in Fig. 1, it can be understood that a silica glass having excellent homogeneity is obtained in Example 1, yielding a favorable transmittance at a wavelength of 157 nm and no drop in transmittance after irradiating the laser radiation. In Example 1, fluorine doping treatment was performed under an atmosphere of gaseous $SiF_4$ to control the concentration of OH groups to less than 1 wt.-ppm and that of fluorine to 1.8 mol%, and the thermal and mechanical homogenization treatments are applied.

In Example 2, the fluorine doping treatment was performed at a temperature lower and under an amount of gaseous $SiF_4$ less than those used in Example 1, thereby the concentration of OH groups was controlled to less than 1 wt.-ppm and that of fluorine was controlled to 0.2 mol%, i.e., a value lower than that used in Example 1. Thus, by applying a homogenization treatment similar to that employed in Example 1, a silica glass having excellent homogeneity was obtained.

The silica glass obtained in this example is superior t to an optical silica glass of a conventional type not subjected to fluorine doping concerning transmittance and resistance against laser radiation, but is inferior to the silica glass obtained in Example 1. However, the silica glass obtained in this example is usable as a substrate for photomasks. Accordingly, the product obtained in Example 1 is more suited for lenses and the like.

The glass obtained in Comparative Example 1 was subjected to heat treatment without using gaseous $Cl_2$ before doping it with fluorine, and fluorine doping was performed under gaseous $SiF_4$ atmosphere. Thus, the glass contains 6 ppm of residual OH groups. This is believed due to the gradual dehydration which was caused by gaseous $SiF_4$.

A silica glass having excellent homogeneity was obtained by applying the homogenization treatment and the annealing treatment to a glass, the fluorine concentration of which was set at 1.0 mol%, in a manner similar to those applied in Example 1. However, since the glass contains residual OH groups, the transmittance at a wavelength of 157 nm was as low as 30 %, and such a low transmittance makes it unfeasible even as a substrate for masks. Furthermore, absorption peaks appeared at wavelengths of 215 nm and 260 nm by irradiating a laser radiation, and the transmittance was further lowered. Thus, the resistance against laser also became poor as a result.

The glass according to Comparative Example 2 was subjected to dehydration treatment using gaseous $Cl_2$, but the transparent vitrification was performed without applying fluorine doping treatment, and the homogenization treatment and the annealing treatment were performed in the manner similar to that used in Example 1. The concentration of OH groups was set at 1 wt.-ppm or lower. Because the glass does not contain any fluorine, it has oxygen-deficient defects having an absorption band at a wavelength of 163 nm, yields low transmittance for a light having a wavelength of 157 nm, and a considerably lowered transmittance after the irradiation of laser. Furthermore, because the cooling rate after annealing was set at a considerably higher rate as compared with that employed in Example 1, the birefringence was increased.

The glass according to Comparative Example 3 was subjected to dehydration treatment by using gaseous $Cl_2$, but the fluorine doping was performed under a lower flow rate of gaseous $SiF_4$, a tower temperature, a higher rate of moving the glass downward at heating, and performing transparent vitrification under a lower flow rate of gaseous $SiF_4$. The concentration of OH groups is 1 wt.-ppm or lower, but the concentration of fluorine was set as low as 0.05 mol%. Furthermore, no homogenization treatment nor annealing treatment was performed. Because the glass contains trace amount of fluorine, it is not always true that the transmittance and the resistance against laser are poor, but it was found that the glass contained striae, that the birefringence was high, and that the distribution in refractive index was unfavorable.

Thus, it makes it unfeasible to pattern lines in the sub-micron units, and it becomes extremely difficult to form glasses exceeding a diameter size of 200 mm.

**Effect of the Invention**

In accordance with the optical silica glass of the present invention, the concentrations of fluorine and Si-OH are controlled and a thermal annealing treatment and a homogenization treatment are incorporated. Thus, the present invention enables a silica glass having totally satisfactory optical characteristics; i.e., the silica glass has high optical transmittance and excellent resistance against laser radiation, is free from striae, and yet, has a low birefringence and is highly homogeneous. Accordingly, the silica glass can be effectively used as an optical silica glass member for transmitting $F_2$ excimer laser radiation.

**Claims**

1. An optical silica glass member for transmitting $F_2$ excimer laser radiation formed of a transparent silica glass body, wherein the fluorine concentration is in a range of from 0.1 to 2.0 mol-% whereby the fluorine concentration distribution is 0.002 mol-% or less, the OH group concentration is 5 wt.-ppm or less and the birefringence at a wavelength of 633 nm is 0.5 nm/cm or lower.

2. An optical silica glass member for transmitting $F_2$ excimer laser radiation as claimed in claim 1, wherein the internal transmittance for the $F_2$ excimer laser generation wavelength of 157 nm is 70 % or higher.

3. A method of producing an optical silica glass member for transmitting $F_2$ excimer laser radiation which comprises a transparent silica glass body, comprising depositing fine silica particles obtained by flame hydrolysis in gaseous phase of a compound containing silicon on a heat resistant base body and thereby forming a porous preform, and then vitrifying the resulting porous preform into a transparent body in the temperature range of from 1,400 to 1,500 °C, which method further comprises, between the forming step of the porous preform and the vitrification step for obtaining the transparent silica glass body, a first heat treatment step in a temperature range of from 800 to 1,200 °C under a mixed gaseous atmosphere of a chlorine-containing compound and oxygen, and a second heat treatment step for doping the porous preform with fluorine after the first heat treatment step, in a temperature range of from 800 to 1,300 °C under a gaseous atmosphere of a compound containing fluorine atoms, whereby, after the vitrification step, a step of removing the striae in at least one direction is provided, which step comprises performing a homogenization treatment based on a mechanical deformation force applied to the heated and softened transparent silica glass body obtained by said vitrification step for obtaining the transparent body.

4. A method of producing an optical silica glass member for transmitting $F_2$ excimer laser radiation as claimed in claim 3, wherein a step of thermal annealing treatment is provided after the striae removing step, which step comprises, after heating said transparent silica glass body to a temperature higher than the cooling initiation point, performing gradual cooling from the cooling initiation point to 600 °C while maintaining the cooling rate of 5 ° C/hour or lower.

**Patentansprüche**

1. Optisches Bauteil aus Quarzglas für die Übertragung der Strahlung eines $F_2$ Excimerlasers, das aus einem transparenten Quarzglaskörper gebildet ist, **dadurch gekennzeichnet, dass** die Fluorkonzentration im Bereich zwischen 0,1 und 2 Mol-% und die OH-Gruppenkonzentration bei 5 Gew.-ppm oder weniger liegt, wobei die Streuung der Fluorkonzentration 0,002 Mol-% oder weniger, und die Doppelbrechung bei einer Wellenlänge von 633 nm 0,5 nm/cm oder weniger beträgt.

2. Optisches Bauteil aus Quarzglas für die Übertragung der Strahlung eines $F_2$ Excimerlasers nach Anspruch 1, **dadurch gekennzeichnet, dass** die interne Lichtdurchlässigkeit (internal transmittance) für die von einem $F_2$ Excimerlaser erzeugte Strahlung einer Wellenlänge von 157 nm bei 70 % oder höher liegt.

3. Verfahren zur Herstellung eines optischen Bauteils aus Quarzglas für die Übertragung der Strahlung eines $F_2$ Excimerlasers, das aus einem transparenten Quarzglaskörper gebildet ist, indem feine, durch Flammenhydrolyse einer siliziumhaltigen Komponente aus der Gasphase erhaltene Silicapartikel auf einem hitzebeständigen Substratkörper unter Bildung einer porösen Vorform abgeschieden werden, wobei die poröse Vorform anschließend unter Bildung eines transparenten Körpers bei einer Temperatur im Bereich zwischen 1400 und 1500°C verglast wird, wobei das Verfahren zwischen dem Verfahrensschritt der Bildung der porösen Vorform und dem Verfahrensschritt des Verglasens zur Bildung des transparenten Quarzglaskörpers, weiterhin einen ersten Heißbehandlungsschritt bei einer Temperatur im Bereich zwischen 800 und 1200°C unter einer Mischgasatmosphäre aus einer chlorhaltigen Komponente und Sauerstoff, sowie nach dem ersten Heißbehandlungsschritt einen zweiten Heißbehandlungsschritt zum Dotieren der porösen Vorform mit Fluor bei einer Temperatur im Bereich zwischen 800 und 1300°C in einer Gasatmosphäre aus einer Fluoratome enthaltenden Verbindung beinhaltet, wobei nach dem Verfahrensschritt des Verglasens ein Verfahrensschritt zum Entfernen von Schlieren in mindestens einer Richtung durchgeführt wird, wobei dieser Verfahrensschritt die Durchführung einer Homogenisierungsbehandlung umfasst, die auf Anwendung einer mechanischen Deformationskraft basiert, die auf den erhitzten und erweichten transparenten Quarzglaskörper, erhalten infolge des besagten Verfahrensschrittes des Verglasens unter Bildung des transparenten Körpers, einwirkt.

**4.** Verfahren zur Herstellung eines optischen Bauteils aus Quarzglas für die Übertragung der Strahlung eines $F_2$ Excimerlasers nach Anspruch 3, **dadurch gekennzeichnet, dass** nach dem Verfahrensschritt zum Entfernen von Schlieren ein Temperbehandlungsschritt erfolgt, der nach dem Erhitzen des transparenten Quarzglaskörpers auf eine Temperatur oberhalb des oberen Kühlpunkts (cooling initiation point) ein allmähliches Abkühlen vom oberen Kühlpunkt auf eine Temperatur von 600°C mit einer Abkühlrate von 5°C/Stunde oder niedriger umfasst.

**Revendications**

**1.** Organe optique en verre de silice pour la transmission du rayonnement de laser Excimer $F_2$ réalisé à partir d'un corps de verre de silice transparent, dans lequel la concentration de fluor est comprise entre 0,1 et 2,0 en pourcentage de mol, la distribution de concentration de fluor étant égale ou inférieure à 0,002 en pourcentage de mol, la concentration de groupe OH étant égale ou inférieure à 5 ppm en poids et la biréfringence à une longueur d'ondes de 633 nm étant inférieure ou égale 0,5 nm/cm.

**2.** Organe optique en verre de silice optique pour la transmission du rayonnement de laser Excimer $F_2$ tel que revendiqué dans la revendication 1, dans lequel la transmittance interne pour la génération de longueur d'ondes par le laser Excimer F2 de 157 nm est supérieure ou égale à 70 %.

**3.** Procédé de production d'un organe en verre de silice optique pour la transmission du rayonnement de laser Excimer $F_2$ qui comprend un corps de verre de silice transparent, comprenant le dépôt de fines particules de silice obtenues par hydrolyse à la flamme en phase gazeuse d'un composé contenant du silicium sur un corps de base résistant à la chaleur et formant ainsi une préforme poreuse, et ensuite la vitrification de la préforme poreuse en résultant dans un corps transparent dans la plage de température de 1400°C à 1500°C, procédé qui comprend en outre entre l'étape de formation de la préforme poreuse et l'étape de vitrification pour obtenir le corps de verre de silice transparent, une première étape de chauffage à une plage de température comprise entre 800 et 1200°C sous une atmosphère gazeuse mixte d'un composé contenant du chlore et de l'oxygène et une seconde étape de chauffage pour le dopage de la préforme poreuse avec du fluor après la première étape de chauffage dans une plage de température comprise entre 800 à 1300°C sous une atmosphère gazeuse d'un composé contenant des atomes de fluor, après la vitrification, une étape d'élimination des stries dans au moins une direction étant prévue, étape qui comprend un traitement d'homogénéisation basé sur une force de déformation mécanique appliquée au corps de verre de silice transparent chauffé et adouci obtenu par ladite étape de vitrification pour obtenir le corps transparent.

**4.** Procédé de production d'un organe en verre de silice optique pour la transmission du rayonnement de laser Excimer $F_2$ tel que revendiqué dans la revendication 3, dans lequel une étape de recuit thermique est prévue après l'étape d'élimination des stries, cette étape qui comprend après le chauffage dudit corps de verre de silice transparent à une température supérieure au point initial de refroidissement, la réalisation d'u refroidissement progressif du point initial de refroidissement à 600° tout en maintenant le degré de refroidissement inférieur ou égal à 5°C/heure.

|  | Example 1 | Example 2 | Comparative Ex. 1 | Comparative Ex. 2 | Comparative Ex. 3 |
|---|---|---|---|---|---|
| Condition of Dehydration: Temperature Gas flow rate [liter/minute] | 1100 °C Cl₂ 0.1 O₂ 0.4 He 7.0 | 1100 °C Cl₂ 0.1 O₂ 0.4 He 7.0 | 1100 °C He 7.0 | 1100 °C Cl₂ 0.1 O₂ 0.4 He 7.0 | 1100 °C Cl₂ 0.1 O₂ 0.4 He 7.0 |
| Condition of F doping: Temperature Gas flow rate [liter/minute] | 1250 °C SiF₄ 0.4 He 7.0 | 1100 °C SiF₄ 0.05 He 7.0 | 1250 °C SiF₄ 0.1 He 7.0 | No fluorine doping | 1050 °C SiF₄ 0.05 He 7.0 |
| Condition of Transparent Vitrification: Temperature Gas flow rate [liter/minute] | 1480 °C SiF₄ 0.4 He 7.0 | 1480 °C SiF₄ 0.05 He 7.0 | 1480 °C SiF₄ 0.1 He 7.0 | 1500 °C He 7.0 | 1480 °C SiF₄ 0.05 He 7.0 |
| Annealing condition: Temperature Time duration | 1150 °C 20 hours | 1150 °C 20 hours | 1150 °C 20 hours | 1150 °C 20 hours | No annealing |
| Cooling rate after annealing | 1 °C/hour to 550 °C | 1 °C/hour to 550 °C | 1 °C/hour to 550 °C | 2 °C/hour to 900 °C | - |
| Concentration of OH groups [ppm] | < 1 | < 1 | 8 | < 1 | < 1 |
| Concentration of Fluorine [mol%] | 1.8 | 0.2 | 1.0 | 0 | 0.05 |
| Birefringence at 633 nm [nm/cm] | < 0.5 | < 0.5 | < 0.5 | < 1 | < 5 |
| Striae | No striae in 3 directions | No striae in 3 directions | No striae in 3 directions | No striae in 3 directions | Striae in 3 directions |
| Apparent transmittance at 157 nm before irradiating laser radiation [%] | 79 | 71 | 30 | 24 | 62 |
| Apparent transmittance at 157 nm after irradiating laser radiation [%] | 79 | 67 | 24 | < 3 | 55 |
| Resistance against laser | Superior | Superior | - | - | - |
| Δn | 1E-8 | 1E-8 | 1E-8 | 1E-8 | 5E-8 |

## Fig. 1

```
┌─────────────────────────┐
│  Preparation of porous  │
│         preform         │        (S1)
└─────────────────────────┘
             │
             ▼
┌─────────────────────────┐
│  Reducing OH groups and │
│    removing oxygen-     │        (S2)
│ deficient defects (1st  │
│         step)           │
└─────────────────────────┘
             │        ┌──────────────────────────────────┐
             │        │ • Under an atmosphere containing  │
             │        │   chlorine compounds and oxygen   │
             │        │ • 800 °C – 1200 °C                │
             │        └──────────────────────────────────┘
             ▼
┌─────────────────────────┐
│ Fluorine-doping treatment│
│   step (2nd step)       │        (S3)
└─────────────────────────┘
             │        ┌──────────────────────────────────┐
             │        │ • Under an atmosphere containing  │
             │        │   fluorine                        │
             │        │ • 800 °C – 1300 °C                │
             │        └──────────────────────────────────┘
             ▼
┌─────────────────────────┐
│   Vitrification step    │        (S4)
└─────────────────────────┘
             │
             ▼
┌─────────────────────────┐
│  Step of thermal and    │
│      mechanical         │        (S5)
│ homogenization treatment│
└─────────────────────────┘
             │
             ▼
┌─────────────────────────┐
│   Thermal annealing     │
│ treatment step (4th step)│       (S6)
└─────────────────────────┘
                      ┌──────────────────────────────────┐
                      │ • - 5 °C/hour or less             │
                      └──────────────────────────────────┘
```

# Fig. 2

15

**Fig. 3**